## Europäisches Patentamt
## European Patent Office
## Office européen des brevets

(19)

(11) Numéro de publication: **0 159 226**
**B1**

(12) **FASCICULE DE BREVET EUROPÉEN**

(45) Date de publication du fascicule du brevet:
**10.08.88**

(21) Numéro de dépôt: **85400479.3**

(22) Date de dépôt: **13.03.85**

(51) Int. Cl.⁴: **H 04 Q 3/52,** G 02 F 1/315,
G 02 B 26/08

(54) Commutateur optique.

(30) Priorité: **13.03.84 FR 8403804**

(43) Date de publication de la demande:
**23.10.85 Bulletin 85/43**

(45) Mention de la délivrance du brevet:
**10.08.88 Bulletin 88/32**

(84) Etats contractants désignés:
**BE DE FR GB IT NL SE**

(56) Documents cité:
EP-A-0 090 723
FR-A-2 475 239
US-A-3 612 653

APPLIED OPTICS, vol. 21, no. 8, 15 avril 1982, pages
1386-1393, Optical Society of America, New York,
US; R.A. SOREF: "Electrooptic 4 x 4 matrix switch
for multimode fiber-optic systems"

(73) Titulaire: **THOMSON- CSF TELEPHONE, 146,
Boulevard de Valmy, F-92707 Colombes (FR)**

(72) Inventeur: **Fiorese, Serge, c/o THOMSON- CSF
TELEPHONE/DCP 46 Quai A. Le Gallo, F-92100
Boulogne Billancourt (FR)**
Inventeur: **Raillard, Yves, c/o THOMSON- CSF
TELEPHONE/DCP 46 Quai A. Le Gallo, F-92100
Boulogne Billancourt (FR)**
Inventeur: **Rey, Alain, c/o THOMSON- CSF
TELEPHONE/DCP 46 Quai A. Le Gallo, F-92100
Boulogne Billancourt (FR)**

(74) Mandataire: **Weinmiller, Jürgen, Lennéstrasse 9
Postfach 24, D-8133 Feldafing (DE)**

## Description

La présente invention concerne un commutateur optique à M entrées et N sorties, capable d'aiguiller un faisceau lumineux reçu sur l'une quelconque de ses M entrées vers l'une quelconque de ses N sorties.

Un tel commutateur est particulièrement utile dans le cadre de réseaux optiques de vidéocommunication, principalement dans les équipements dits de commutation, concentration et sélection.

La présente invention concerne plus particulièrement un commutateur optique du type à cellules de commutation optique élémentaires à une entrée et deux sorties.

De telles cellules de commutation optique élémentaires peuvent par exemple opérer par réflexion, suivant deux directions possibles, d'un faisceau lumineux incident. Il en est ainsi des cellules fonctionnant par déplacement de prismes ou de miroirs, connues de l'art antérieur.

De telles cellules de commutation optique élémentaires peuvent également opérer par réflexion, avec changement de direction, ou par transmission, sans changement de direction, d'un faisceau lumineux incident ayant une direction donnée. Il en est ainsi des cellules à cristaux liquides, connues de l'art antérieur.

Il en est également ainsi des cellules fonctionnant par déplacement d'une gouttelette de liquide entre deux lames de verre sous l'effet d'un champ électrique, permettant de rendre un faisceau lumineux incident soit réfléchi par réflexion totale si la goutelette n'est pas sur le trajet optique, soit transmis si la gouttelette est centrée sur le trajet optique, le faisceau émergeant étant alors parallèle au faisceau incident. Des cellules de ce type ont fait l'objet des demandes de brevet français n° 08 304 745, 8 311 074 et 8 316 793 déposées au nom de THOMSON-CSF respectivement les 23 mars, 4 juillet et 21 octobre 1983.

Il est connu de disposer de telles cellules en cascade, de manière à former un sélecteur optique à une entrée et à P sorties, permettant d'aiguiller un faisceau lumineux reçu sur son entrée, vers la sortie de rang p, par réflexions successives sur les cellules de rangs 1 à p-1, à l'aide d'un plan de réflexion auxiliaire permettant des réflexions succesives sur des cellules adjacentes, et par transmission à travers la cellule de rang p.

La demande de brevet français no 8 316 793 précédemment citée décrit un sélecteur optique de ce type, réalisé avec des cellules de commutation élémentaires fonctionnant par déplacement d'une gouttelette de liquide entre deux lames de verre sous l'effet d'un champ électrique.

De même l'article de Richard A. Soref, publié dans la revue Applied Optics, vol. 21, no 8, avril 1982, décrit un sélecteur optique à une entrée et à quatre sorties, réalisé avec des cellules de commutation élémentaires à cristaux liquides.

Cet article décrit également un commutateur optique à quatre entrées et quatre sorties, réalisé en juxtaposant un premier ensemble de 4 sélecteurs 1 X 4, c'est à dire à une entree et quatre sorties, et un deuxième ensemble de 4 sélecteurs 4 X 1, c'est-à-dire à quatre entrées et une sortie, obtenus par inversion des entrées et des sorties de sélecteurs 1 X 4, les 16 sorties du premier ensemble étant reliées aux 16 entrées du deuxième ensemble.

Cette disposition présente l'inconvénient de nécessiter deux plans de cellules élémentaires (un pour chaque ensemble de sélecteurs, l'utilisation d'une sortie par transmission impliquant à priori un changement de plan) et d'entraîner des trajets optiques importants.

La présente invention a pour objet un commutateur optique basé sur un principe différent, utilisant une association différente de cellules de commutation élémentaires, permettant notamment de minimiser les trajets optiques et d'associer toutes les cellules de commutation élémentaires dans une seule matrice plane, d'où une simplification par mise en commun des supports pour l'ensemble des cellules (par exemple plaque de verre unique, un seul plan de cristal liquide, miroirs coplanaires...etc) et par mise en commun des electrodes de commande et association de ces électrodes suivant une structure matricielle classique.

Le commutateur optique à M entrées et N sorties suivant l'invention, du type à cellules de commutation optique élémentaires à une entrée et deux sorties, comporte:

- M X N cellules de commutation optique élémentaires disposées dans un même plan sous forme d'une matrice à M lignes et N colonnes définissant respectivement une première et une deuxième direction,

- M X N premières cellules de renvoi, et M X N secondes cellules de renvoi, aptes à assurer respectivement un renvoi du faisceau sortant d'une cellule de commutation optique élémentaire, vers l'entrée d'une cellule de commutation optique élémentaire adjacente située respectivement dans une première ou une deuxième direction suivant qu'une première ou une deuxième sortie de cette cellule de commutation optique élémentaire est sélectionnee.

Les objets et caractéristiques de la présente invention apparaîtront plus clairement à la lecture de la description suivante d'un exemple de réalisation, faite en relation avec les dessins ci-annexés dans lesquels:

La figure 1 est une vue montrant la disposition des cellules de commutation dans un commutateur suivant l'invention.

La figure 2 est une vue en coupe d'un commutateur conforme à l'invention, suivant deux plans orthogonaux (X, Z) et (Y, Z).

Les figures 3a et 3b sont des vues schématiques en coupe transversale d'un exemple de cellule de commutation optique élémentaire particulièrement adapté à la réalisation d'un commutateur suivant l'invention.

La figure 4 est une vue en perspective d'un commutateur suivant l'invention.

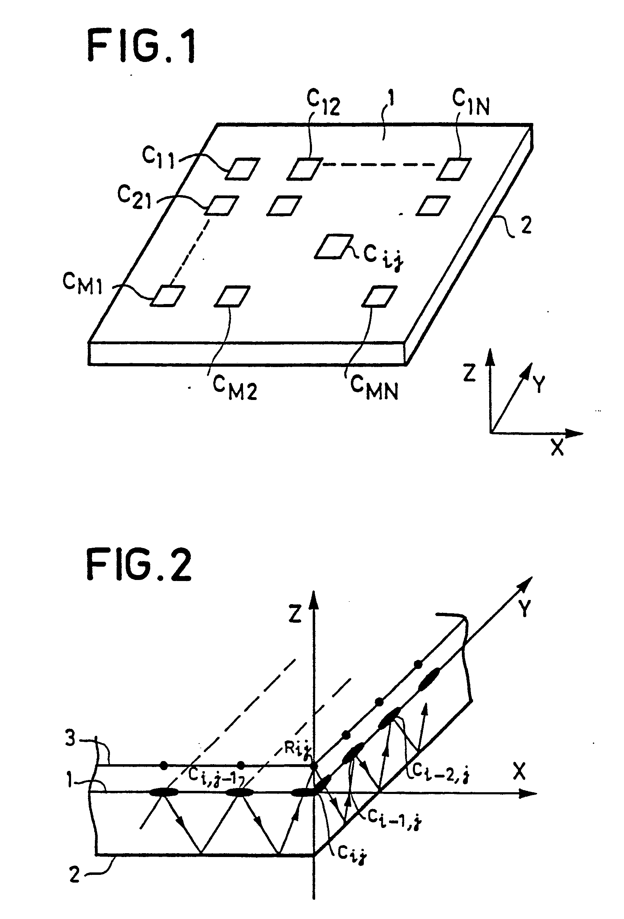

Le commutateur à M entrées et N sorties comporte, comme représenté sur la figure 1, M X N cellules de commutation optique élémentaires $C_{ij}$ disposées dans un même plan 1 suivant une matrice à M lignes et N colonnes, définissant respectivement deux directions X et Y, chaque cellule $C_{ij}$ étant définie par son numéro de ligne i ($1 \leqslant i \leqslant M$) et par son numero de colonne j ($1 \leqslant j \leqslant N$). Les cellules $C_{ij}$ formant la première colonne constituent les M cellules d'entrée du commutateur, et les cellules $C_{1j}$ formant la première ligne constituent les N cellules de sortie du commutateur. Le faisceau d'entrée du commutateur, reçu sur l'une des M cellules d'entrée, est contenu dans un plan (X, Z) où Z désigne la direction normale au plan (X, Y). Le faisceau de sortie du commutateur, fourni par l'une des M cellules de sortie, est contenu dans un plan (Y, Z).

Les cellules de commutation opèrent à titre d'exemple par réflexion ou par transmission d'un faisceau incident, suivant la commande qui leur est individuellement appliquée les premières et deuxièmes sorties étant alors désignées respectivement par sorties réflexion et sorties transmission.

Sur la figure 2, on a représenté une vue en coupe du commutateur, suivant les deux directions X et Y, et plus particulièrement suivant la ième ligne et la jième colonne de cellules de commutation. Outre les cellules de commutation optique élémentaires, ce commutateur comporte également M X N premières cellules de renvoi et M X N secondes cellules de renvoi aptes à assurer respectivement un renvoi du faisceau obtenu sur l'une des sorties d'une cellule de commutation, vers l'entrée d'une cellule de commutation adjacente située dans l'une ou l'autre direction, suivant le type de sortie qui a été sélectionné.

Les premières cellules de renvoi, constituées par des surfaces réfléchissantes, sont regroupées dans un plan de réflexion auxiliaire 2 parallèle au plan 1 des cellules de commutation, permettant de réfléchir le faisceau obtenu sur la sortie réflexion d'une cellule de commutation, vers l'entrée d'une cellule de commutation adjacente, sans changement de plan de propagation du faisceau. Le plan de réflexion auxiliaire 2 permet ainsi une propagation du faisceau par réflexions successives sur des cellules adjacentes situées dans une même direction, c'est-à-dire sur une ligne ou une colonne donnée.

Chaque seconde cellule de renvoi $R_{ij}$ permet de renvoyer le faisceau obtenu sur la sortie transmission de la cellule de commutation $C_{ij}$ vers cette même cellule de commutation, avec changement de plan de propagation du faisceau. La cellule de commutation $C_{ij}$, opérant par hypothèse par transmission, transmet alors le faisceau vers le plan de réflexion 2 qui réfléchit à son tour le faisceau vers la cellule de commutation $c_{i-1,j}$.

Ainsi, comme le montre la figure 2, si le faisceau se propage initialement sur la ligne i, suivant la direction X, et dans le plan (X, Z), et si la sortie transmission de la cellule de commutation $C_{ij}$ est sélectionnée, grâce à la cellule de déviation $R_{ij}$- le faisceau se propage ensuite sur la colonne j, suivant la direction Y et dans le plan (Y, Z).

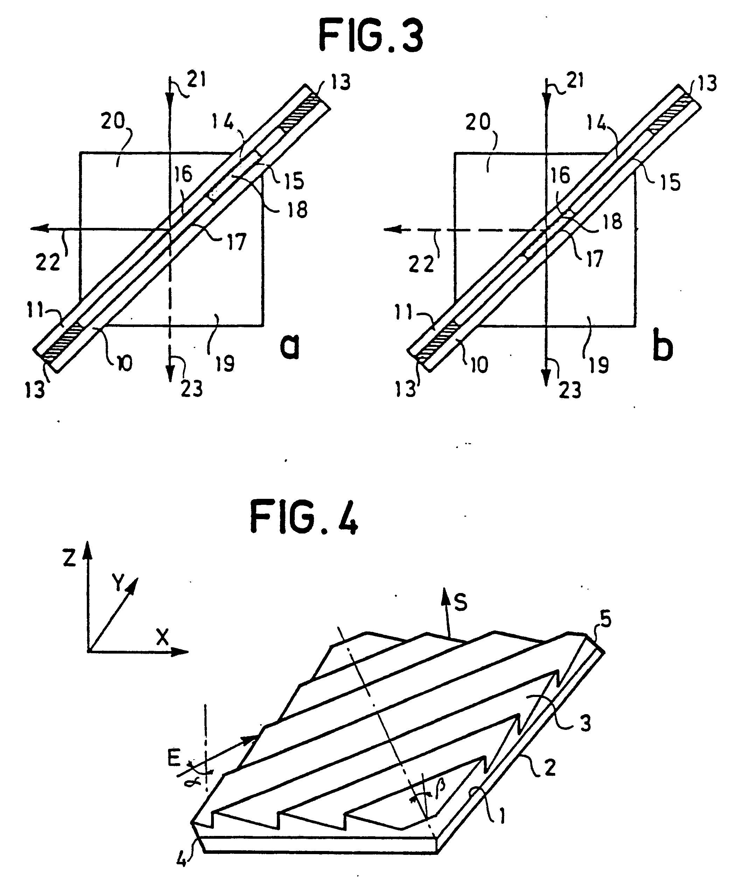

Les figures 3a et 3b sont des vues schématiques en coupe transversale d'un exemple de cellule élémentaire de commutation optique particulièrement adapté à la réalisation d'un commutateur optique suivant l'invention, fonctionnant par déplacement d'une gouttelette de liquide entre deux lames de verre sous l'effet d'un champ électrique, et ayant fait l'objet des demandes de brevet précitées.

Cette cellule comprend deux plaques rigides de confinement 10 et 11, par exemple en verre, délimitant l'espace capillaire défini par des cales 13. Les faces internes des plaques 10 et 11 ont subi une préparation qui consiste en des nettoyages appropriés et des dépôts de surface qui doivent éviter la formation de films capillaires par un liquide dont on souhaite contrôler électriquement le déplacement. Les électrodes de commande sont constituées du couple d'électrodes 14 et 15 et du couple d'électrodes 16 et 17. Elles sont reliées à un générateur de tension non représenté susceptible de fournir une différence de potentiel entre les électrodes de chaque couple. La cellule comprend un globule 18 apte à se déplacer dans un fluide qui peut être de l'air. Le globule 18 est choisi parmi les hydrocarbures tels que des alcanes comprenant de 5 à 23 atomes de carbone, des cétones ou des dérivés nitrés. Sur les faces extérieures des plaques 10 et 11 sont collés des prismes à réflexion totale 19 et 20. Un faisceau lumineux 21 est choisie de façon à permettre la possibilité d'une réflexion totale sur la face interne de la lame 11. Le faisceau 21 traverse le prisme 20 et parvient sur la face interne de la lame 11. Deux cas peuvent alors se produire suivant la nature du fluide compris entre les électrodes 16 et 17.

Le faisceau 21 est réfléchi en un faisceau 22 lorsque le volume conrôlé par les électrodes 16 et 17 est occupé par un gaz tel que l'air dont l'indice de réfraction optique est de l'ordre de 1, alors que celui du verre de la lame 11 est de l'ordre de 1,5. C'est ce qui est repésenté à la figure 3a.

Si le volume contrôlé par les electrodes 16 et 17 est occupé par le globule 18 initialement situé entre les électrodes 14 et 15, l'indice de réfraction de cette région passe à une valeur qui est quement comprise entre 1,4 et 1,7. Dans ces conditions, la reflexion totale sur la face interne de la lame de verre 11 est supprimée et le faisceau 21 est transmis en un faisceau 23 comme le montre la figure 3b.

La commande électrique du dispositif représenté aux figures 3a et 3b se fait de la façon suivante. Sans excitation électrique, le globule reste dans la position où il se trouve et le faisceau 21 est réfléchi en un faisceau 22 (c'est par exemple le cas de la figure 2a). Si l'on applique une différence de potentiel entre les électrodes 16 et 17 et que le champ électrique qui y est alors induit est suffisant, le globule vient se placer entre ces électrodes et y restera après suppression du champ électrique. Le faisceau 21 est alors trnasmis un faisceau 23. Pour que le globule reparte entre les électrodes 14 et 15, il faut inverser le processus de commande.

Le commutateur suivant l'invention peut également être realisé avec des cellules de commutation optique élémentaires basées sur tout autre principe, par exemple avec des cellules à déplacement de prismes ou de miroirs, ou avec des cellules à cristaux liquides.

Suivant un exemple de réalisation, les cellules de renvoi $R_{ij}$ sont constituées par des miroirs élémentaires disposés, comme les cellules de commutation, suivant une matrice à M lignes et N colonnes, et inclinés par rapport au plan (X, Y) des cellules de commutation.

Suivant l'exemple de réalisation représenté sur la figure 4, correspondant au cas où les cellules de renvoi $R_{ij}$ assurent un changement de plan de propagation de (X, Z) vers (Y, Z), et avec les orientations choisies pour les axes X et Y, les intersections des plans de ces miroirs avec le plan (X, Y) forment un réseau de droites parallèles à la bissectrice du premier quadrant (défini par X > O et Y > O) et ces plans sont inclinés par rapport au plan (X, Y) d'un angle β défini par la relation : $\operatorname{tg}\beta = \frac{\operatorname{tg}\alpha}{\sqrt{2}}$ dans laquelle α désigne l'angle formé par le faisceau lumineux entrant dans le commutateur, avec la direction Z. Suivant l'exemple de réalisation représenté sur la figure 4, les miroirs élémentaires $R_{ij}$ dont les plans coïncident sont regroupés pour former un seul miroir, d'où un ensemble de (M + N) - 1 miroirs (7 miroirs à titre d'exemple sur la figure 4, où M = N = 4) formant un bloc monolithique.

Sur cette même figure 4, losque les cellules de commutation élémentaires sont du type décrit en relation avec les figures 3a et 3b, les faces d'entrée 4 et 5 assurent la fonction remplie par les prismes élémentaires 19 et 20, qui se sont plus nécessaires dans ce cas de réalisation.

## Revendications

1. Commutateur optique à M entrées et N sorties, du type à cellules de commutation optique élémentaires à une entrée et deux sorties, caractérisé en ce qu'il comporte
   - M X N cellules de commutation optique élémentaires ($C_{ij}$) disposées dans un même plan (1) sous forme d'une matrice à M lignes et N colonnes définissant respectivement une première et une deuxième direction,
   - M X N premières cellules de renvoi (2), et M X N secondes cellules de renvoi ($R_{ij}$), aptes à assurer respectivement un renvoi du faisceau sortant d'une cellule de commutation optique élémentaire, vers l'entrée d'une cellule de commutation optique élémentaire adjacente située respectivement dans une première ou une deuxième direction suivant qu'une première ou une deuxième sortie de cette cellule de commutation optique élémentaire est sélectionnée.

2. Commutateur selon la revendication 1, dans lequel les cellules de commutation opèrent par réflexion ou par transmission d'un faisceau lumineux incident, et dans lequel les premières cellules de renvoi consistent en un plan de réflexion auxiliaire (2) parallèle au plan (X, Y) des cellules de commutation, caractérisé en ce que les secondes cellules de renvoi consistent en l'association des cellules de commutation opérant par transmission, du plan de réflexion auxiliaire (2), et de miroirs dont les plans, inclinés par rapport au plan (X, Y) des cellules de commutation d'un angle β tel que $\operatorname{tg}\beta = \frac{\operatorname{tg}\alpha}{\sqrt{2}}$ (où α est l'angle du faisceau entrant dans le commutateur, avec une direction Z orthogonale au plan (X, Y)) coupent celui-ci suivant des droites parallèles à la bissectrice de l'un des quadrants du plan (X, Y).

3. Commutateur selon la revendication 2, caractérisé en ce que les miroirs formant les secondes cellules de renvoi, dont les plans coïncident, sont regroupés pour former un seul miroir (3), soit M + N - 1 miroirs au total.

4. Commutateur selon l'une des revendications 1 à 3, caractérisé en ce que les cellules de commutation opèrent par déplacement d'une goutelette entre deux lames de verre sous l'effet d'un champ électrique.

## Patentansprüche

1. Optischer Schalter mit M Eingängen und N Ausgängen vom Typ optischer Elementarschaltzellen mit einem Eingang und zwei Ausgängen, gekennzeichnet durch
   - M X N optische Elementarschaltzellen ($C_{ij}$), die in der gleichen Ebene (1) unter Bildung einer Matrix mit M Zeilen und N Spalten, welche jeweils eine erste und zweite Richtung definieren, angeordnet sind,
   - M X N erste Reflektorzellen und M X N zweite Reflektorzellen zur Umlenkung des aus einer optischen Elementarschaltzelle austretenden Strahls auf den Eingang einer benachbarten optischen Elementarschaltzelle, welche je nachdem, ob ein erster oder zweiter Ausgang dieser optischen Elementarschaltzelle gewählt wird, jeweils in einer ersten oder zweiten Richtung angeordnet ist.

2. Schalter nach Anspruch 1, in welchem die Schaltzellen als Reflexions- oder Transmissionszellen des einfallenden Lichtstrahls arbeiten und die ersten Umlenkzellen aus einer Hilfsreflexionsebene (2) parallel zur Ebene (X, Y) der Schaltzellen bestehen, dadurch gekennzeichnet, daß die zweiten Umlenkzellen gemeinsam aus den im Transmissionsbetrieb arbeitenden Schaltzellen, der Hilfsreflexionsebene (2) und aus Spiegeln bestehen, deren gegen die Ebene (X, Y) der Schaltzellen um einen Winkel β geneigte Ebenen die Ebene (X, Y) entlang von Geraden schneiden, die parallel zur Halbierenden eines Quadranten der Ebene (X, Y) verlaufen, wobei tg β = $\frac{tg\,\alpha}{\sqrt{2}}$, und α der Winkel zwischen dem in den Schalter fallenden Strahl und der orthogonal zur Ebene (X, Y) stehenden Achse Z ist.

3. Schalter nach Anspruch 2, dadurch gekennzeichnet, daß die die zweiten Umlenkzellen bildenden Spiegel, deren Ebenen übereinstimmen, zu einem einzigen Spiegel (3) zusammengefaßt sind, also zu insgesamt M + N - 1 Spiegeln.

4. Schalter nach einem der Ansprüche 1 bis 3, dadurch gekennzeichnet, daß die Schaltzellen mit dem Mittel der Verschiebung eines zwischen zwei Glasscheiben eingebrachten Tröpfchens unter der Einwirkung eines elektrischen Feldes arbeiten.

**Claims**

1. A M inlet by N outlet optical switch of the type comprising elementary optical switching cells each having one inlet and two outlets, the switch being characterized in that it compises: M x N elementary optical switching cells ($C_{ij}$) disposed in a common plane (1) in the form of a matrix of M lines by N cold respectively defining a first direction and a second direction; and

M x N first return cells (2), and M x N second return cells ($R_{ij}$) respectively suitable for returning a beam leaving an elementary optical switching cell towards the inlet of an adjacent elementary optical switching cell situated respectively in a first or in a second direction depending on whether a first or a second outlet of said elementary optical switching cell has been selected.

2. A switch according to claim 1, wherein the switching cells operate by reflecting or transmitting an incident light beam, and wherein the first return cells constitute an auxiliary reflection plane (2) parallel to the plane (X, Y) of the switching cells, characterized in that the second return cells are constituted by the association of the switching cells operating by transmission, the auxiliary reflection plane (2), and mirrors whose planes are inclined relative to the plane (X, Y) of the switching cells at an angle β such that tan β = $(1/\sqrt{2})$ tan α (where α is the angle of the beam entering the switching relative to a direction Z which is orthogonal to the plane (X, Y)), which inclined planes intersect the plane (X, Y) along straight lines parallel to the bisector of one of the quadrants of the plane (X, Y).

3. A switch according to claim 2, characterized in that the mirrors forming the second return cells and having coincident planes are grouped together to constitute single mirrors (3), giving a total of M + N - 1 mirrors.

4. A switch according to any one of claims 1 to 3, characterized in that the switching cells operate by displacing a droplet between two plates of glass under the effect of an electric field.

# FIG.1

# FIG.2

# FIG. 3

a

b

# FIG. 4